# EUROPÄISCHE PATENTSCHRIFT

(11) **EP 2 490 907 B1**
(45) Veröffentlichungstag und Bekanntmachung des Hinweises auf die Patenterteilung: **03.12.2014**
(21) Anmeldenummer: 11767958.9
(22) Anmeldetag: 22.09.2011
(51) Int. Cl.: B60J 7/22

(54) **SCHIEBEDACHWINDABWEISER UND DESSEN HERSTELLUNG**
WIND DEFLECTOR FOR SLIDING ROOF PANEL INCL. CORRESPONDING PRODUCTION METHOD
DÉFLECTEUR DE VENT POUR TOIT COULISSANT ET MÉTHODE DE FABRICATION CORRESPONDANTE

(30) Priorität: 20.10.2010 DE 102010048964
(43) Veröffentlichungstag der Anmeldung: 29.08.2012
(73) Patentinhaber: Webasto SE, 82131 Stockdorf (DE)
(72) Erfinder: WIMMER, Rudolf, 82110 Germering (DE)
(74) Vertreter: advotec.
(86) Internationale Anmeldenummer: PCT/EP2011/066536
(87) Internationale Veröffentlichungsnummer: WO 2012/052247

(56) Entgegenhaltungen:
- EP-A2- 1 342 600
- DE-A1-102005 054 186
- DE-A1-102005 054 187
- DE-B3-102006 043 275

## Beschreibung

Die Erfindung betrifft einen Windabweiser für ein öffenbares Fahrzeugdach mit den Merkmalen des Oberbegriffs des Patentanspruches 1 sowie ein Verfahren zu dessen Herstellung gemäß Patentanspruch 12.

Ein derartiger Windabweiser ist aus der Praxis bekannt und wird bei einem öffenbaren Fahrzeugdach eingesetzt, das ein verschiebbares Deckelelement aufweist. Der Windabweiser ist in einem bugseitigen Randbereich einer Dachöffnung angeordnet, die mittels des Deckelelements wahlweise verschlossen oder zumindest teilweise freigegeben werden kann. Als Abweiserelement kann der Windabweiser ein aufspannbares Netz umfassen, das an seinem unteren Rand über eine untere Randleiste dachfest angebunden ist und an seinem oberen Rand über eine obere Randleiste an einen Ausstellbügel angebunden ist, der U-förmig ausgebildet sein kann und mit seinen freien Schenkeln, die jeweils einen sogenannten Ausstellarm bilden, im Bereich einer jeweiligen dachfesten Führungsschiene schwenkbar angelenkt ist. Der Ausstellbügel ist in Abhängigkeit von der Öffnungsstellung des Deckelelements zwischen einer niedergedrückten Ruhestellung, in der das Abweiserelement gefaltet ist, und einer ausgestellten Betriebsstellung verschwenkbar, in der das netzartige Abweiserelement aufgespannt ist und eine Anströmfläche bildet. Die Randleisten bisheriger Abweiserelemente sind angenäht, was zeitaufwändig ist und daher hohe Herstellungskosten verursacht. Alternativ ist es bekannt, ein Windabweisernetz direkt an einen Windabweiserbügel anzuspritzen. Dies verlangt aber eine hohe Komplexität des eingesetzten Spritzgießwerkzeugs, was wiederum zu hohen Werkzeugkosten führt.

Aus der Druckschrift DE 10 2005 054 186 A1 ist ein Windabweiser mit den Merkmalen des Oberbegriffs des Patentanspruchs 1 bekannt. Dieser Windabweiser umfasst mithin ein aufspannbares Abweiserelement, das aus einem flächigen Material besteht, das an seinem unteren Randbereich über eine untere Randleiste an einem festen Dachabschnitt und an seinem oberen Randbereich über eine obere Randleiste an einem verschwenkbaren Ausstellbügel befestigt ist.

Aus der Druckschrift DE 10 2006 043 275 B3 ist ein Windabweiser für ein öffenbares Fahrzeugdach bekannt, der ein ausstellbares und aufspannbares Abweiserelement aus einem flexiblen flächigen Material umfasst. Das Abweiserelement kann an seinem oberen Rand und an seinem unteren Rand jeweils einen Keder aufweisen, der an das Abweiserelement angespritzt ist und aus einem elastisch verformbaren Kunststoff besteht.

Des Weiteren wird bei bisherigen Windabweisernetzen ein Ausreißen des Netzes dadurch verhindert, dass am Rand ein Rollsaum oder eine Umkettelung erzeugt wird. Auch dies ist mit einem zeitaufwändigen Herstellungsschritt verbunden.

Der Erfindung liegt die Aufgabe zugrunde, einen Windabweiser der einleitend genannten Gattung zu schaffen, der sich durch niedrige Herstellungskosten und gleichzeitig durch einen hinreichenden Einreißschutz auszeichnet.

Diese Aufgabe ist erfindungsgemäß durch den Windabweiser mit den Merkmalen des Patentanspruches 1 gelöst.

Erfindungsgemäß wird also ein Windabweiser für ein öffenbares Fahrzeugdach mit einem verschiebbaren Deckelelement vorgeschlagen, der ein aufspannbares Abweiserelement aus einem flächigen flexiblen Material umfasst, das mit seinem unteren Randbereich über eine untere Randleiste an einem festen Dachabschnitt und seinem oberen Randbereich über eine obere Randleiste an einem verschwenkbaren Ausstellbügel befestigt ist. Die obere Randleiste und die untere Randleiste sind Bestandteile einer umlaufenden Kunststoffrandumspritzung, die vollständig umlaufend ist.

Der Kern der Erfindung besteht mithin darin, dass das Abweiserelement, das aus einem flexiblen, flächigen Material und insbesondere aus einem Kunststoffnetz gebildet ist, in einem Spritzgießwerkzeug an seinem Rand umlaufend mit einer Kunststoffumspritzung versehen wird, so dass die Ränder des Abweiserelements vor einem Einreißen geschützt sind. Des Weiteren bietet die Kunststoffrandumspritzung des Abweiserelements die Möglichkeit der Anbindung des Abweiserelements an einen Ausstellbügel und an einen festen Dachabschnitt, da die zur Anbindung dienenden Randleisten integraler Bestandteil der Randumspritzung sind. Gleichzeitig ist das Abweiserelement durch die vollständig umlaufende Randumspritzung gegen seitliches Einreißen geschützt.

Bei einer speziellen Ausführungsform des Windabweisers nach der Erfindung ist die Randumspritzung als Mehrkomponentenspritzgießelement ausgebildet, wobei eine erste Materialkomponente in ersten Abschnitten der Randumspritzung und eine zweite Materialkomponente in zweiten Abschnitten der Randumspritzung angeordnet ist. Vorzugsweise haben die Materialkomponenten unterschiedliche Härten bzw. Elastizitäten. Insbesondere kann dann eine harte Kunststoffmaterialkomponente im Bereich der Randleisten vorgesehen sein, wohingegen in Bereichen, die bei der Montage oder auch beim Ausstellen des Windabweisers verformt werden müssen, eine Materialkomponente mit geringerer Härte und/oder höherer Elastizität ausgebildet sein kann.

Um das Abweiserelement ohne weitere Zusatzteile an den Abweiserbügel und/oder den festen Dachabschnitt anbinden zu können, umfasst die Randumspritzung vorzugsweise Rastelemente, mittels derer die Anbindung realisiert werden kann.

Beispielsweise sind die Rastelemente in einstückiger Weise an dem Abweiserelement ausgebildet. Alternativ ist es auch denkbar, dass die Rastelemente als Einlegeteile der Randumspritzung ausgebildet sind.

Die Rastelemente können in vielfältiger Weise ausgebildet sein. So weist beispielsweise zumindest eine der Randleisten insbesondere an einer der Anströmseite des Abweiserelements abgewandten Seite Rastnasen auf, die jeweils in eine Ausnehmung des Ausstellbügels oder des festen Dachabschnitts eingreifen. Auch kann zumindest eine der Randleisten einstückig angeformte Federlaschen umfassen, die ebenfalls in korrespondierende Ausnehmungen des Ausstellbügels oder des festen Dachabschnitts eingreifen.

Des Weiteren kann es zur Fixierung des Abweiserelements vorteilhaft sein, wenn der die obere Randleiste und/oder der die untere Randleiste bildende Abschnitt der Randumspritzung des Abweiserelements zumindest bereichsweise einen tannenbaumförmigen Querschnitt hat, der in eine korrespondierende Nut an dem Ausstellbügel oder an dem festen Dachabschnitt eingreift. Ein derartiger tannenbaumförmiger Querschnitt sichert den betreffenden Randleistenabschnitt zuverlässig in der jeweiligen Nut. Alternativ oder zusätzlich kann das Abweiserelement bzw. dessen Randumspritzung auch mit dem Abweiserbügel und/oder dem festen Dachabschnitt verschraubt oder verschweißt sein. Die Schweißanbindung kann mittels eines Ultraschallschweißverfahrens realisiert sein.

Üblicherweise weist das Abweiserelement einen sich zumindest annähernd in Fahrzeugquerrichtung erstreckenden Anströmabschnitt auf, an den sich beidseits jeweils ein Endabschnitt anschließt, der gegenüber dem Anströmabschnitt in Richtung einer vertikalen Fahrzeuglängsmittelebene gebogen ist und sich in Fahrzeugslängsrichtung erstreckt.

Der tannenbaumförmige Querschnitt der Randumspritzung ist bei einer speziellen Ausführungsform des Windabweisers nach der Erfindung in Abschnitten der unteren Randleiste vorgesehen, die die Endabschnitte des Abweiserelements unten begrenzen.

Um das Abweiserelement weiter zu stabilisieren, können von der Randumspritzung in einstückiger Weise Verstärkungsleisten abzweigen, die das Abweiserelement in dessen vom Rand beabstandeten Bereichen verstärken. Die Verstärkungsleisten können einseitig oder auch beidseitig an dem Abweiserelement angeordnet sein.

Ferner können an das Abweiserelement auch Verstärkungsleisten angespritzt sein, die keine Verbindung zu der Randumspritzung aufweisen.

Die Erfindung hat auch ein Verfahren zur Herstellung des Windabweisers zum Gegenstand. Dieses Verfahren umfasst folgende Schritte:
- Einlegen eines flächigen, aufspannbaren Abweiserelements in ein Spritzgießwerkzeug, so dass das Abweiserelement eine ebene Anordnung hat und mit seinem gesamten umlaufenden Rand innerhalb eines zumindest angenähert rahmenartigen Formhohlraums angeordnet ist;
- Einspritzen mindestens einer Kunststoff-Materialkomponente in den Formhohlraum, so dass sich eine vollständig umlaufende Randumspritzung des Abweiserelements ausbildet;
- Entformen des mit der Randumspritzung versehenen Abweiserelements; und
- Anbinden des Abweiserelements an einen schwenkbaren Ausstellbügel und einen festen Dachabschnitt des Fahrzeugs.

Durch die ebene Anordnung des Abweiserelements in dem Spritzgießwerkzeug gestaltet sich der Einlegeschritt sehr einfach. Das Abweiserelement muss nicht entlang von Kurven oder dergleichen geführt werden, was eine Bildung von Falten bewirken könnte.

Die Randumspritzung wird vorzugsweise in einem zentralen Anspritzbereich des Abweiserelements aus einer Hartkunststoffkomponente gebildet, wohingegen die Randumspritzung in den seitlichen Endbereichen des Abweiserelements aus einer Weichkunststoffkomponente gebildet wird, die eine größere Flexibilität als die Hartkunststoffkomponente aufweist.

Bei einem Anbinden des Abweiserelements an den Ausstellbügel wird das als ebenes Bauteil hergestellte Abweiserelement zur Ausbildung eines in Draufsicht etwa U-förmigen Abweiserelements in beidseits angeordneten Abweiserelementendabschnitten in Richtung einer Längsmittelebene des Windabweisers gebogen, so dass es von einem zweidimensionalen Gebilde in ein dreidimensionales Gebilde verformt wird.

Des Weiteren wird beim Einspritzen der mindestens einen Werkstoffkomponente in den Formhohlraum mindestens eine Versteifungsleiste ausgebildet, die von der Randumspritzung abzweigt und das Abweiserelement in vom Rand beabstandeten Bereichen übergreift bzw. durchsetzt.

Als Werkstoff für die Kunststoffrandumspritzung kann Polypropylen (PP), gegebenenfalls mit einem Faseranteil von beispielsweise etwa 60%, TFE und/oder TPV, gegebenenfalls ebenfalls mit einem Faseranteil, eingesetzt werden.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel eines Windabweisers nach der Erfindung ist in der Zeichnung schematisch vereinfacht dargestellt und wird in der nachfolgenden Beschreibung näher erläutert. Es zeigt:
- Fig. 1: eine perspektivische Ansicht eines Fahrzeugdachs mit einem erfindungsgemäß ausgebildeten Windabweiser;
- Fig. 2: eine perspektivische Ansicht eines Windabweiserelements des Windabweisers;
- Fig. 3: eine Rückansicht des Windabweiserelements;
- Fig. 4: eine Seitenansicht des Windabweiserelements;
- Fig. 5: das Windabweiserelement nach dessen Umspritzung in einem Spritzgießwerkzeug;
- Fig. 6: einen Schnitt durch das Windabweiserelement entlang der Linie VI-VI in Fig. 3;
- Fig. 7: eine Detailansicht des Windabweiserelements in dem Bereich VII in Fig. 3;
- Fig. 8: einen Schnitt durch das Windabweiserelement entlang der Linie VIII-VIII in Fig. 7;
- Fig. 9: eine Detailansicht des Windabweiserelements in dem Bereich IX in Fig. 3;
- Fig. 10: einen Schnitt durch das Windabweiserelement entlang der Linie X-X in Fig. 3; und
- Fig. 11: einen Schnitt durch das Windabweiserelement entlang der Linie XI-XI in Fig. 4.

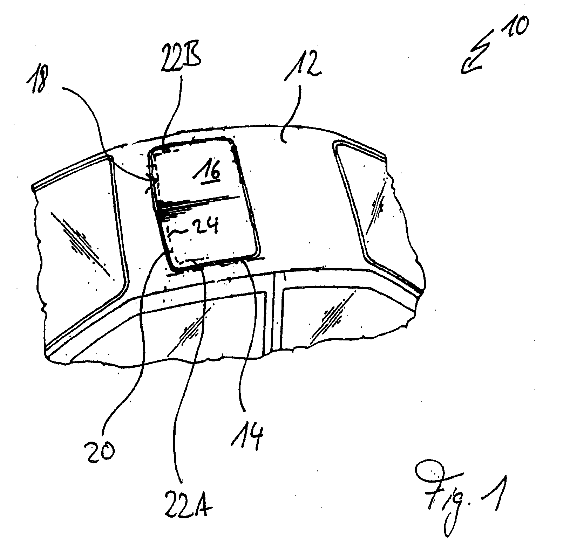

In Fig. 1 ist ein Kraftfahrzeug 10 dargestellt, das ein Fahrzeugdach 12 aufweist, welches mit einem Dachausschnitt 14 versehen ist, der mittels eines verschiebbaren Deckelelements 16 wahlweise verschlossen oder zumindest teilweise freigegeben werden kann.

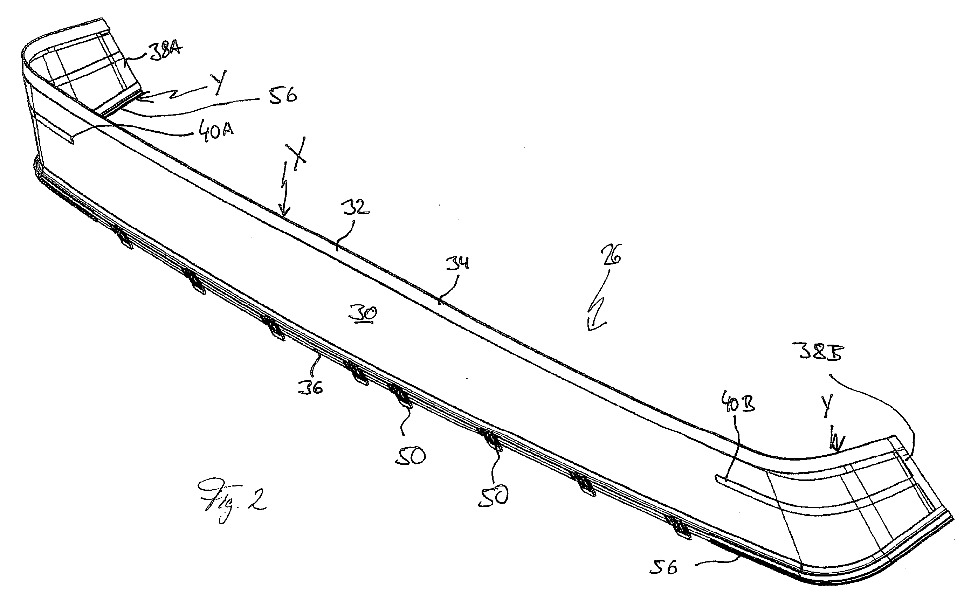

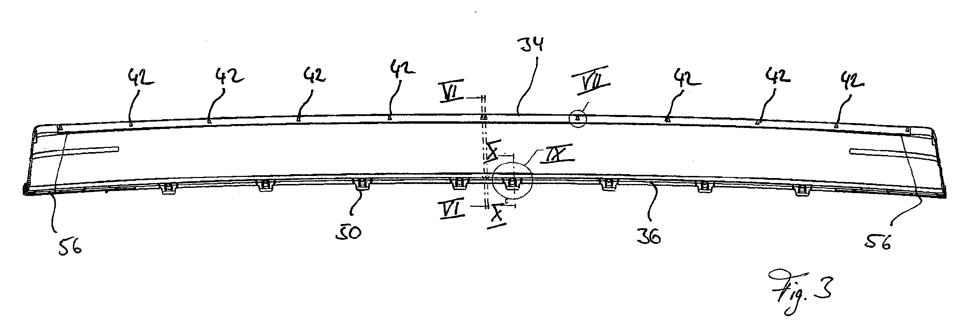

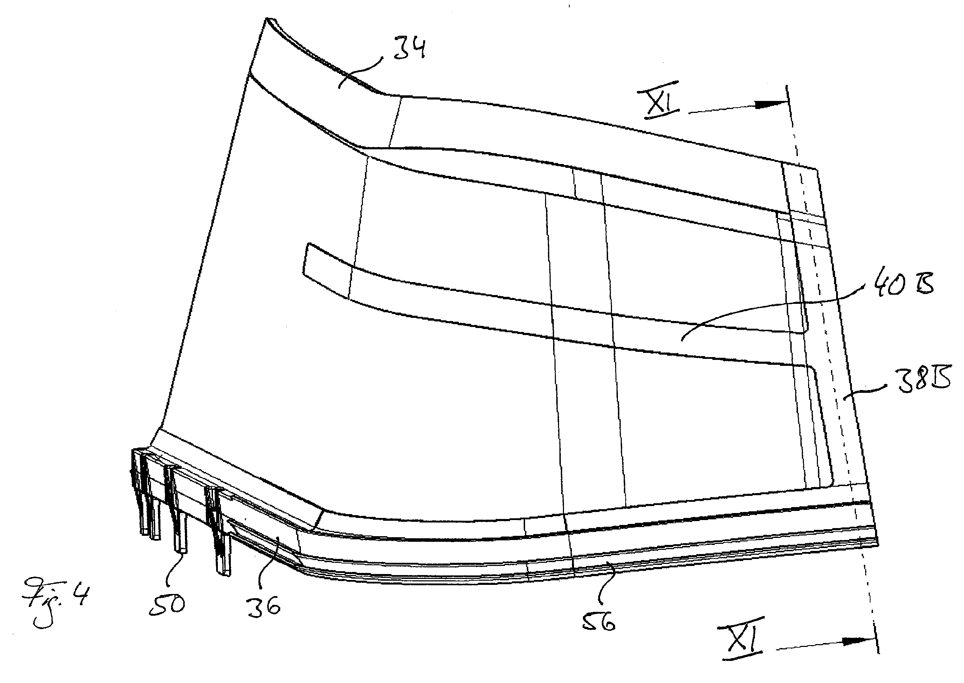

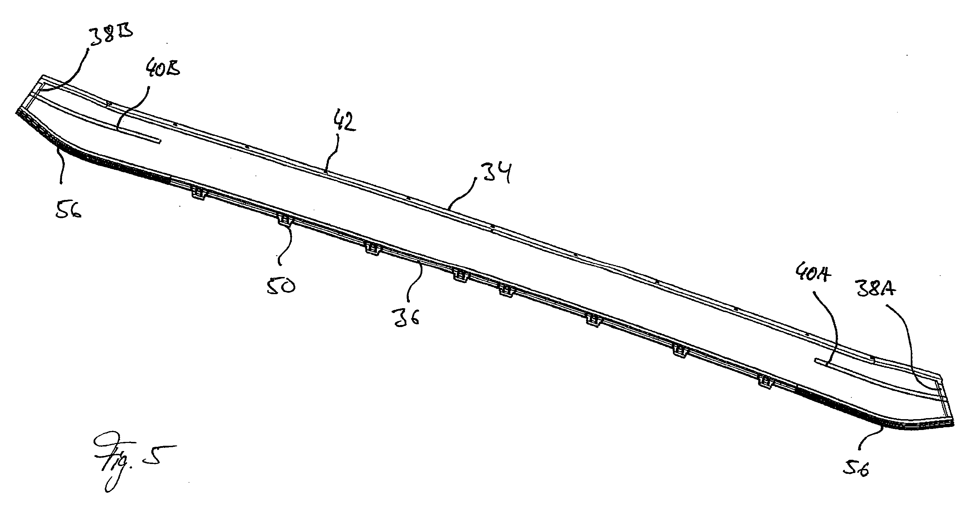

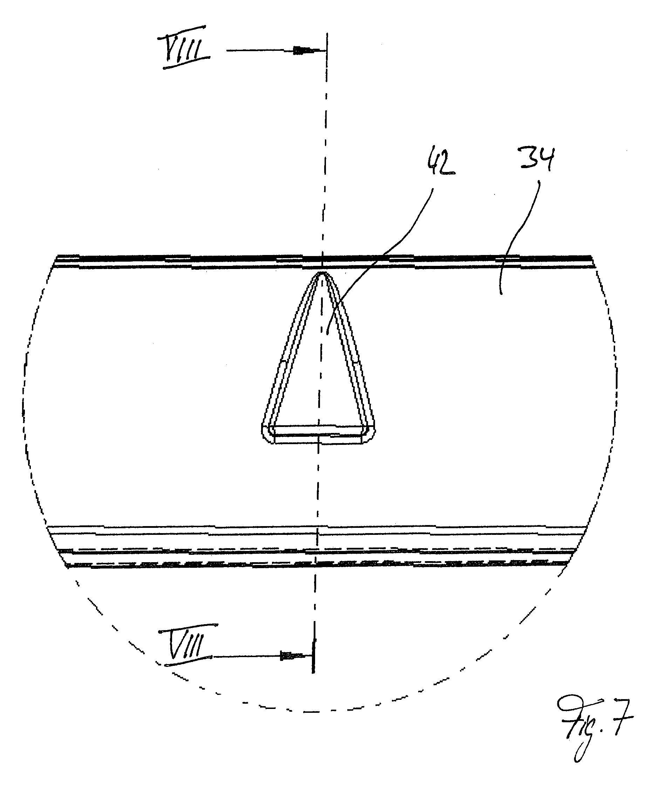

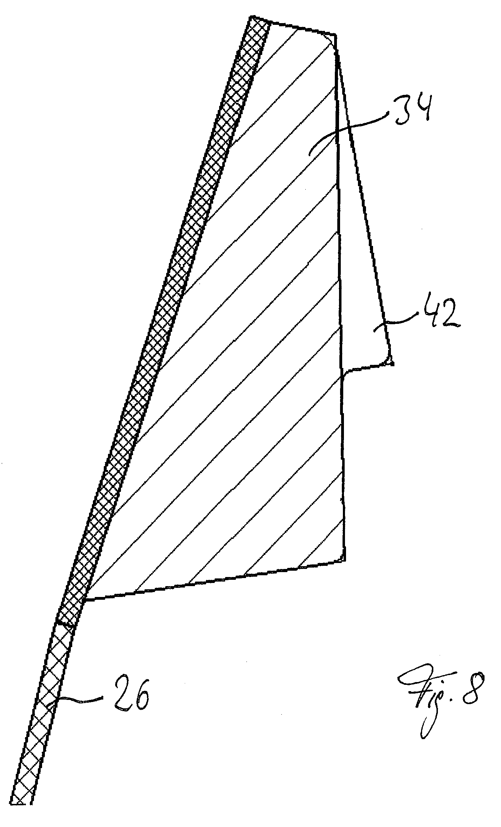

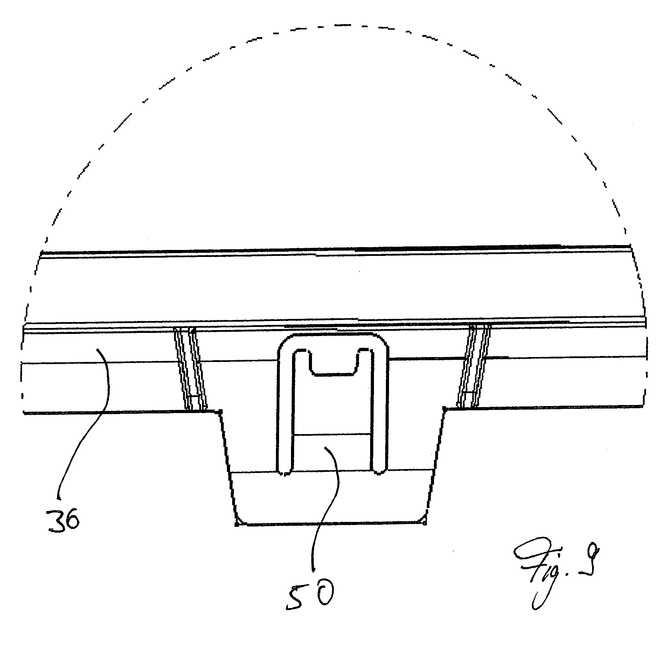

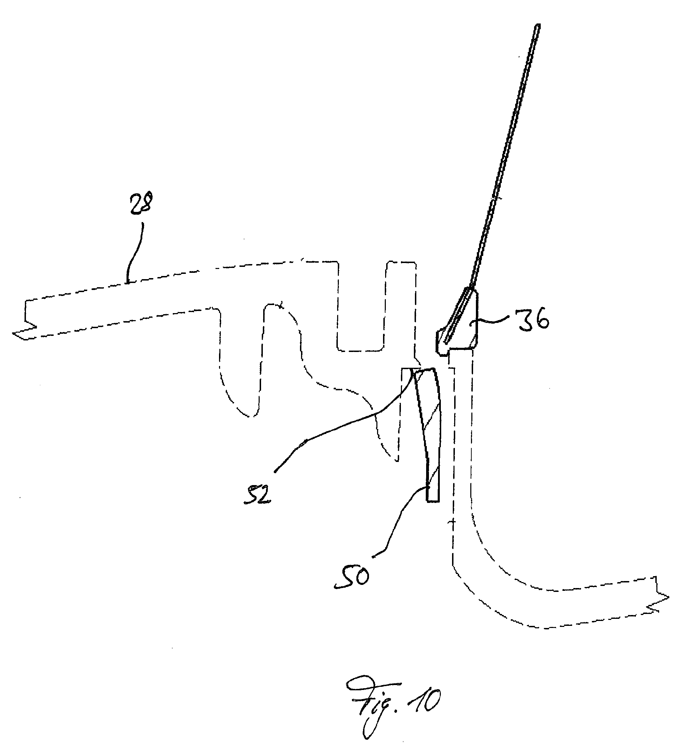

Angrenzend an einen bugseitigen Randbereich des Dachausschnitts 14 ist ein in Abhängigkeit vom Öffnungsgrad des Deckelelements 16 ausstellbarer Windabweiser 18 angeordnet, der anhand der Figuren 2 bis 11 detailliert beschrieben wird und sich im Wesentlichen in Fahrzeugquerrichtung erstreckt. Der Windabweiser dient dazu, die Entstehung etwaig störender Luftströmungen und Luftverwirbelungen im Fahrzeuginnenraum bei geöffnetem Dachausschnitt 14, d. h. bei zurückgefahrenem Deckelelement 16 zu verhindern.

Der Windabweiser 18 umfasst einen zumindest annähernd U-förmigen Ausstellbügel 20, der zwei als Ausstellarme dienende Schenkel 22A und 22B aufweist, die über einen sich in Fahrzeugquerrichtung erstreckenden Schenkel 24 miteinander verbunden sind. Die Ausstellarme 22A und 22B sind jeweils im Bereich einer sich in Fahrzeuglängsrichtung erstreckenden, hier nicht näher dargestellten Führungsschiene für das Deckelelement 16 schwenkbar an das Fahrzeugdach angelenkt und jeweils beispielsweise mittels einer Ausstellfeder in Ausstellrichtung vorgespannt. Der Ausstellgrad der Ausstellarme 22A und 22B und damit des Ausstellbügels 20 wird durch die Position des Deckelelements 16 in Fahrzeuglängsrichtung bezogen auf die sich an die Dachöffnung 14 angrenzenden festen Dachabschnitte bestimmt. Das Deckelelement 16 fährt beim Schließen des Dachausschnitts 14 ausgehend von einer Öffnungsstellung von hinten auf die Ausstellarme 22A und 22B auf und drückt diese gegen die Kraft der Ausstellfedern nach unten, d. h. in eine Ruhestellung. Beim Zurückfahren des Deckelelements 16 werden die Ausstellarme 22A und 22B freigegeben, so dass sie durch die Wirkung der Ausstellfedern selbsttätig in eine Betriebsstellung ausschwenken.

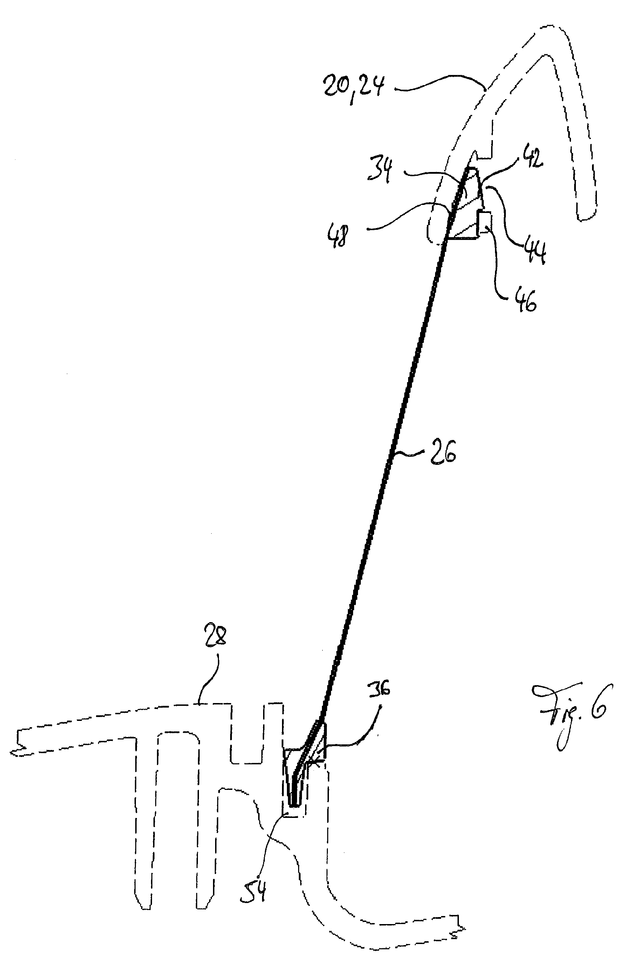

Wie den Figuren 2 bis 11 zu entnehmen ist, weist der Windabweiser 18 ein netzartiges Abweiserelement 26 auf, das zwischen dem Ausstellbügel 20 und einem festen Dachabschnitt 28 eingespannt ist, welcher Fig. 6 in gestrichelter Form zu entnehmen ist und Bestandteil eines karosseriefest angeordneten Schiebedachrahmens ist. Das als Netz ausgebildete Abweiserelement 26 ist im ausgestellten Zustand des Ausstellbügels 20 zwischen dem Ausstellbügel 20 und dem festen Dachabschnitt 28 aufgespannt. Im abgesenkten Zustand des Ausstellbügels 20 ist das netzartige Abweiserelement 26 in gefalteter Form zwischen dem abgesenkten Ausstellbügel 20 und dem festen Dachabschnitt 28 angeordnet.

Das Abweiserelement 26 ist aus einem feinmaschigen Netz 30 aus Kunststoff gebildet, das mit einer vollständig umlaufenden Kunststoff-Randumspritzung 32 versehen ist. Die Randumspritzung 32 umfasst eine obere Randleiste 34, die im montierten Zustand des Windabweisers 18 in den Ausstellbügel 20 eingreift, eine untere Randleiste 36, die im montierten Zustand des Windabweisers 18 in den festen Dachabschnitt 28 eingreift, sowie seitliche Schenkelabschnitte 38A und 38B, die jeweils die Enden der oberen Randleiste 34 und der unteren Randleiste 36 miteinander verbinden. Die Randumspritzung 32 übergreift den Rand des Netzes 30 derart, dass ein Einreißen des Randes des Netzes wirkungsvoll verhindert wird.

Das Abweiserelement 26 hat in seiner Draufsicht eine zumindest angenähert U-förmige Form, die sich in einen im Wesentlichen in Fahrzeugquerrichtung erstreckenden, durch den Schenkel 24 des Ausstellbügels 20 begrenzten Anströmabschnitt X und zwei sich seitlich an den Anströmabschnitt X anschließende Endabschnitte Y unterteilt, die jeweils von dem betreffenden, seitlichen Schenkelabschnitt 38A bzw. 38B und den betreffenden Ausstellarmen 22A bzw. 22B begrenzt sind und sich in Fahrzeuglängsrichtung erstrecken.

Das Abweiserelement 26 umfasst des Weiteren in seinen Endabschnitten Y jeweils eine Verstärkungsleiste 40A bzw. 40B, die von dem betreffenden Schenkelabschnitt 38A bzw. 38B abzweigt und sich parallel zu der oberen Randleiste 34 bis in den Anströmabschnitt X des Abweiserelements 26 erstreckt. Die Verstärkungsleisten 40A und 40B sind einstückiger Bestandteil der umlaufenden Randumspritzung 32 des Abweiserelements 26.

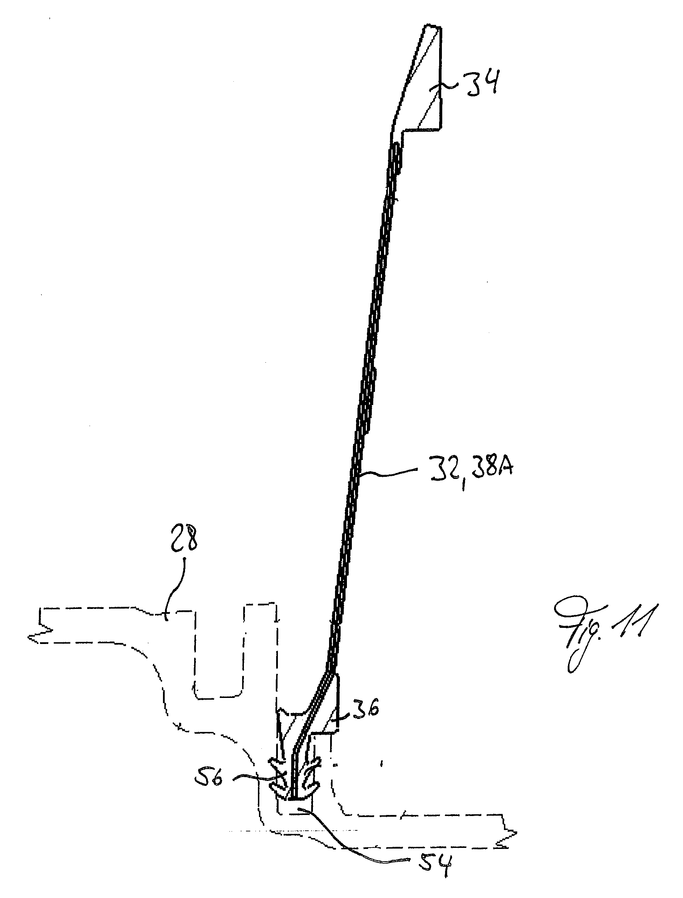

Die obere Randleiste 20 hat, wie beispielsweise Fig. 11 zu entnehmen ist, einen im Wesentlichen keilförmigen Querschnitt. Über die Erstreckung der oberen Randleiste hinweg in Fahrzeugquerrichtung sind an deren der Anströmseite abgewandten Fläche Rastnasen 42 ausgebildet, die eine in etwa dreieckige Grundfläche aufweisen und im montierten Zustand jeweils in eine Rastausnehmung 44 des Ausstellbügels 20 eingreifen und einen Raststeg 46 hintergreifen, wobei die obere Randleiste 34 in eine unterseitige Nut 48 des Ausstellbügels 20 eingreift. Durch die Rastnasen 42 kann eine sichere Anbindung des Abweiserelements 26 an den Ausstellbügel 20 gewährleistet werden.

Die untere Randleiste 36 ist in einstückiger Weise mit einer Vielzahl von Kunststofffederlaschen 50 versehen, die im Bereich des Anströmabschnitts X in Fahrzeugquerrichtung verteilt sind und jeweils an einem Hinterschnitt 52 des festen Dachabschnitts 26 anliegen. Im Übrigen greift die untere Randleiste 36 im Bereich des Anströmabschnittes X in eine Nut 54 des festen Dachabschnitts 28 ein.

Zur Anbindung der Endabschnitte Y an den festen Dachabschnitt 28 hat die untere Randleiste 36 in den Endabschnitten Y jeweils einen tannenbaumartigen Querschnitt 56, der ausziehsicher in der Verlängerung der Nut 54 angeordnet ist.

Die Kunststoff-Randumspritzung 32 des Abweiserelements 26 ist als Mehrkomponentenelement ausgebildet. Die Randleisten 34 und 36 sind im Bereich des Anströmabschnittes X aus einem Hartkunststoff gebildet, wohingegen die Randleisten 34 und 36 in ihren in Fahrzeuglängsrichtung gebogenen, im Bereich der Endabschnitte Y angeordneten Bereichen und auch die Verstärkungsleisten 40A und 40B aus einem Weichkunststoff gebildet sind, der eine höhere Flexibilität als der Hartkunststoff aufweist.

Die Herstellung des Abweiserelements 26 erfolgt derart, dass ein Netzzuschnitt in ebener Anordnung in ein Kunststoffspritzgießwerkzeug eingelegt wird, so dass der Rand des Netzzuschnittes innerhalb eines Formhohlraums bzw. einer Kavität des Spritzgießwerkzeugs liegt. Anschließend wird das Spritzgießwerkzeug geschlossen, so dass die Kunststoffwerkstoffe zur Ausbildung der Randumspritzung 32 und der Verstärkungsleisten 40A und 40B eingespritzt werden können. Nach dem Aushärten kann das resultierende, ebene Bauteil entformt werden. Zur Anbindung an den Ausstellbügel 20 und den festen Dachabschnitt 28 werden die resultierenden Randleisten 34 und 38 entsprechend gebogen und in den korrespondierenden Nuten 48 und 54 verrastet.

### Bezugszeichenliste

- 10: Kraftfahrzeug
- 12: Fahrzeugdach
- 14: Dachausschnitt
- 16: Deckelelement
- 18: Windabweiser
- 20: Ausstellbügel
- 22A, 22B: Ausstellarme
- 24: Schenkel
- 26: Abweiserelement
- 28: fester Dachabschnitt
- 30: Netz
- 32: Randumspritzung
- 34: obere Randleiste
- 36: untere Randleiste
- 38A, 38B: seitliche Schenkelabschnitte
- 40A, 40B: Verstärkungsleiste
- 42: Rastnase
- 44: Rastausnehmung
- 46: Raststeg
- 48: Nut
- 50: Federlasche
- 52: Hinterschnitt
- 54: Nut
- 56: tannenbaumartiger Querschnitt

## Patentansprüche

1. Windabweiser für ein öffenbares Fahrzeugdach mit einem verschiebbaren Deckelelement (16), umfassend ein aufspannbares Abweiserelement (26) aus einem flächigen flexiblen Material, das an seinem unteren Randbereich über eine untere Randleiste (36) an einem festen Dachabschnitt (28) und an seinem oberen Randbereich über eine obere Randleiste (34) an einem verschwenkbaren Ausstellbügel (20) befestigt ist, **dadurch gekennzeichnet, dass** die obere Randleiste (34) und die untere Randleiste (36) Bestandteile einer vollständig umlaufenden Kunststoff-Randumspritzung (32) des Abweiserelements (26) sind.

2. Windabweiser nach Anspruch 1, **dadurch gekennzeichnet, dass** die Randumspritzung (32) als Mehrkomponentenspritzgießelement ausgebildet ist, wobei eine erste Materialkomponente in ersten Abschnitten der Randumspritzung (32) und eine zweite Materialkomponente in zweiten Abschnitten der Randumspritzung (32) angeordnet ist.

3. Windabweiser nach Anspruch 1 oder 2, **dadurch gekennzeichnet, dass** die Randumspritzung (32) Rastelemente (42, 50, 56) zur Anbindung des Abweiserelements (26) an den festen Dachabschnitt (28) und/oder den verschwenkbaren Ausstellbügel (20) umfasst.

4. Windabweiser nach Anspruch 3, **dadurch gekennzeichnet, dass** die Rastelemente (52, 50, 56) in einstückiger Weise an der umlaufenden Randumspritzung (32) ausgebildet sind.

5. Windabweiser nach Anspruch 3, **dadurch gekennzeichnet, dass** die Rastelemente als Einlegeteile der Randumspritzung ausgebildet sind.

6. Windabweiser nach einem der Ansprüche 3 bis 5, **dadurch gekennzeichnet, dass** zumindest eine der Randleisten (34) Rastnasen (42) aufweist, die jeweils in eine Rastausnehmung (44) des Ausstellbügels (20) oder des festen Dachabschnitts eingreifen.

7. Windabweiser nach einem der Ansprüche 3 bis 6, **dadurch gekennzeichnet, dass** zumindest eine der Randleisten (36) als Rastelemente einstückig angeformte Federlaschen (50) umfasst.

8. Windabweiser nach einem der Ansprüche 1 bis 7, **dadurch gekennzeichnet, dass** der die obere Randleiste (34) und/oder der die untere Randleiste (36) bildende Abschnitt der Randumspritzung (32) des Abweiserelements (26) zumindest bereichsweise einen tannenbaumförmigen Querschnitt (56) hat, der in eine korrespondierende Nut (54) an dem Ausstellbügel bzw. an dem festen Dachabschnitt (28) eingreift.

9. Windabweiser nach einem der Ansprüche 1 bis 8, **dadurch gekennzeichnet, dass** das Abweiserelement (26) einen sich zumindest annäherend in Fahrzeugquerrichtung erstreckenden Anströmabschnitt (X) aufweist, an den sich beidseits jeweils ein Endabschnitt (Y) anschließt, der gegenüber dem Anströmabschnitt (X) in Richtung einer vertikalen Windabweisermittelebene gebogen ist.

10. Windabweiser nach Anspruch 8 und Anspruch 9, **dadurch gekennzeichnet, dass** der tannenbaumförmige Querschnitt (56) in Abschnitten der unteren Randleiste (36) ausgebildet ist, die die Endabschnitte des Abweiserelements (26) unten begrenzen.

11. Windabweiser nach einem der Ansprüche 1 bis 10, **dadurch gekennzeichnet, dass** von der Randumspritzung (32) in einstückiger Weise Verstärkungsleisten (40A, 40B) abzweigen, die das Abweiserelement (26) in dessen vom Rand beabstandeten Bereichen verstärken.

12. Verfahren zur Herstellung eines Windabweisers nach Anspruch 1, umfassend folgende Schritte:
- Einlegen eines flachen, aufspannbaren Abweiserelements (26) in ein Spritzgießwerkzeug, so dass das Abweiserelement (26) eine ebene Anordnung hat und mit seinem umlaufenden Rand innerhalb eines zumindest annähernd rahmenartigen Formhohlraums angeordnet ist;
- Einspritzen mindestens einer Kunststoff-Materialkomponente in den Formhohlraum, so dass sich eine vollständig umlaufende Randumspritzung (32) des Abweiserelements (26) ausbildet;
- Entformen des mit der Randumspritzung (32) versehenen Abweiserelements (26); und
- Anbinden des Abweiserelements (26) an einen schwenkbaren Ausstellbügel (20) und einen festen Dachabschnitt (28) des Fahrzeugs.

13. Verfahren nach Anspruch 12, **dadurch gekennzeichnet, dass** die Randumspritzung (32) in einem zentralen Anströmbereich (X) des Abweiserelements (26) aus einer Hartkunststoffkomponente gebildet wird und in den seitlichen Endbereichen (Y) des Abweiserelements (26) aus einer Weichkunststoffkomponente gebildet wird, die eine größere Flexibilität als die Hartkunststoffkomponente aufweist.

14. Verfahren nach Anspruch 12 oder 13, **dadurch gekennzeichnet, dass** beim Anbinden des Abweiserelements (26) an den Ausstellbügel (20) und an den festen Dachabschnitt (28) beidseits angeordnete Abweiserelementendabschnitte in Richtung einer vertikalen Längsmittelebene des Windabweisers gebogen werden.

15. Verfahren nach einem der Ansprüche 12 bis 14, **dadurch gekennzeichnet, dass** beim Einspritzen der mindestens einen Materialkomponente in den Formhohlraum mindestens eine Verstärkungsleiste (40A, 40B) ausgebildet wird, die von der Randumspritzung (32) abzweigt und das Abweiserelement (26) in vom Rand beabstandeten Bereichen übergreift bzw. durchsetzt.

## Claims

1. Wind deflector for a vehicle roof which may be opened, having a displaceable cover element (16), comprising a stretchable deflector element (26) made from a flat, flexible material and which on its lower edge region is fastened to a fixed roof portion (28) via a lower edge strip (36) and on its upper edge region is fastened to a pivotable raising bow (20) via an upper edge strip (34), **characterized in that** the upper edge strip (34) and the lower edge strip (36) are components of a plastic edge encapsulation extending over the entire periphery (32) of the deflector element (26).

2. Wind deflector according to Claim 1, **characterized in that** the edge encapsulation (32) is configured as a multi-component injection-moulded element, wherein a first material component is arranged in first portions of the edge encapsulation (32) and a second material component is arranged in second portions of the edge encapsulation (32).

3. Wind deflector according to Claim 1 or 2, **characterized in that** the edge encapsulation (32) comprises latching elements (42, 50, 56) for attaching the deflector element (26) to the fixed roof portion (28) and/or the pivotable raising bow (20).

4. Wind deflector according to Claim 3, **characterized in that** the latching elements (52, 50, 56) are configured integrally on the peripheral edge encapsulation (32).

5. Wind deflector according to Claim 3, **characterized in that** the latching elements are configured as inserts of the edge encapsulation.

6. Wind deflector according to one of Claims 3 to 5, **characterized in that** at least one of the edge strips (34) comprises latching lugs (42), which in each case engage in a latching recess (44) of the raising bow (20) or the fixed roof portion.

7. Wind deflector according to one of Claims 3 to 6, **characterized in that** at least one of the edge strips (36) comprises integrally formed spring tabs (50) as latching elements.

8. Wind deflector according to one of Claims 1 to 7, **characterized in that** the portion of the edge encapsulation (32) of the deflector element (26) forming the upper edge strip (34) and/or the lower edge strip (36) has at least partially a fir tree-shaped cross section (56) which engages in a corresponding groove (54) on the raising bow and/or on the fixed roof portion (28).

9. Wind deflector according to one of Claims 1 to 8, **characterized in that** the deflector element (26) comprises a flow portion (X) extending at least approximately in the vehicle transverse direction, and to which on both sides an end portion (Y) is adjoined in each case, said end portion being curved relative to the flow portion (X) in the direction of a vertical central plane of the wind deflector.

10. Wind deflector according to Claim 8 and Claim 9, **characterized in that** the fir tree-shaped cross section (56) is formed in portions of the lower edge strip (36) which define the end portions of the deflector element (26) at the bottom.

11. Wind deflector according to one of Claims 1 to 10, **characterized in that** reinforcing strips (40A, 40B) branch off from the edge encapsulation (32) in an integral manner, said reinforcing strips reinforcing the deflector element (26) in the regions thereof spaced apart from the edge.

12. Method for producing a wind deflector according to Claim 1, comprising the following steps:
- inserting a flat, stretchable deflector element (26) into an injection-moulding tool, so that the deflector element (26) has a planar arrangement and is arranged with its peripheral edge inside an at least approximately frame-like mould cavity;
- injection-moulding at least one plastics material component into the mould cavity, so that an edge encapsulation (32) of the deflector element (26) is formed, extending around the entire periphery;
- removing the deflector element (26) provided with the edge encapsulation (32) from the mould; and
- attaching the deflector element (26) to a pivotable raising bow (20) and a fixed roof portion (28) of the vehicle.

13. Method according to Claim 12, **characterized in that** the edge encapsulation (32) in a central flow region (X) of the deflector element (26) is formed from a hard plastics component, and in the lateral end regions (Y) of the deflector element (26) is formed from a soft plastics component, which has a greater flexibility than the hard plastics component.

14. Method according to Claim 12 or 13, **characterized in that** when attaching the deflector element (26) to the extending clip (20) and to the fixed roof portion (28), deflector element end portions arranged on both sides are bent in the direction of a vertical longitudinal central plane of the wind deflector.

15. The method according to one of Claims 12 to 14, **characterized in that** when injection-moulding the at least one material component in the mould cavity, at least one reinforcing strip (40A, 40B) is formed, said reinforcing strip branching off from the edge encapsulation (32) and encompassing and/or penetrating the deflector element (26) in regions spaced apart from the edge.

## Revendications

1. Déflecteur de vent pour un toit ouvrant de véhicule, comprenant un élément de recouvrement coulissant (16), comprenant un élément déflecteur pouvant être tendu (26) constitué d'un matériau en nappe flexible qui est fixé au niveau de sa région de bord inférieure par le biais d'une baguette de bord inférieure (36) à une portion de toit fixe (28) et au niveau de sa région de bord supérieure par le biais d'une baguette de bord supérieure (34) à un étrier de sortie pivotant (20), **caractérisé en ce que** la baguette de bord supérieure (34) et la baguette de bord inférieure (36) font partie d'un surmoulage de bord en plastique (32) de l'élément déflecteur (26) s'étendant sur toute la périphérie.

2. Déflecteur de vent selon la revendication 1, **caractérisé en ce que** le surmoulage de bord (32) est réalisé sous forme d'élément moulé par injection à plusieurs composants, un premier composant de matériau étant disposé dans des premières portions du surmoulage de bord (32) et un deuxième composant de matériau étant disposé dans des deuxièmes portions du surmoulage de bord (32).

3. Déflecteur de vent selon la revendication 1 ou 2, **caractérisé en ce que** le surmoulage de bord (32) comprend des éléments d'encliquetage (42, 50, 56) pour relier l'élément déflecteur (26) à la portion de toit fixe (28) et/ou à l'étrier de sortie pivotant (20).

4. Déflecteur de vent selon la revendication 3, **caractérisé en ce que** les éléments d'encliquetage (52, 50, 56) sont réalisés d'une seule pièce sur le surmoulage de bord périphérique (32).

5. Déflecteur de vent selon la revendication 3, **caractérisé en ce que** les éléments d'encliquetage sont réalisés sous forme de pièces d'insertion du surmoulage de bord.

6. Déflecteur de vent selon l'une quelconque des revendications 3 à 5, **caractérisé en ce qu'**au moins l'une des baguettes de bord (34) présente des ergots d'encliquetage (42) qui viennent en prise à chaque fois dans un évidement d'encliquetage (44) de l'étrier de sortie (20) ou de la portion de toit fixe.

7. Déflecteur de vent selon l'une quelconque des revendications 3 à 6, **caractérisé en ce qu'**au moins l'une des baguettes de bord (36) comprend, en tant qu'éléments d'encliquetage, des pattes élastiques (50) façonnées d'une seule pièce.

8. Déflecteur de vent selon l'une quelconque des revendications 1 à 7, **caractérisé en ce que** la portion du surmoulage de bord (32) de l'élément déflecteur (26) formant la baguette de bord supérieure (34) et/ou la baguette de bord inférieure (36) présente au moins en partie une section transversale (56) en forme de sapin qui s'engage dans une rainure correspondante (54) sur l'étrier de sortie ou sur la portion de toit fixe (28).

9. Déflecteur de vent selon l'une quelconque des revendications 1 à 8, **caractérisé en ce que** l'élément déflecteur (26) présente une portion d'afflux (X) s'étendant au moins approximativement dans la direction transversale du véhicule, à laquelle se raccorde des deux côtés à chaque fois une portion d'extrémité (Y) qui est courbée par rapport à la portion d'afflux (X) dans la direction d'un plan médian vertical du déflecteur de vent.

10. Déflecteur de vent selon la revendication 8 et la revendication 9, **caractérisé en ce que** la section transversale en forme de sapin (56) est réalisée dans des portions de la baguette de bord inférieure (36) qui délimitent en bas les portions d'extrémité de l'élément déflecteur (26).

11. Déflecteur de vent selon l'une quelconque des revendications 1 à 10, **caractérisé en ce que** des baguettes de renfort (40A, 40B) partent du surmoulage de bord (32) d'un seul tenant, et renforcent l'élément déflecteur (26) dans ses régions espacées du bord.

12. Procédé de fabrication d'un déflecteur de vent selon la revendication 1, comprenant les étapes suivantes :
- insertion d'un élément déflecteur (26) en nappe pouvant être tendu dans un outil de moulage par injection, de telle sorte que l'élément déflecteur (26) présente un agencement plan et soit disposé avec son bord périphérique à l'intérieur d'une cavité de moule au moins approximativement en forme de cadre ;
- injection d'au moins un composant de matériau en plastique dans la cavité de moule, de telle sorte qu'un surmoulage de bord (32) de l'élément déflecteur (26) s'étendant sur toute la périphérie soit formé;
- démoulage de l'élément déflecteur (26) pourvu du surmoulage de bord (32) ; et
- raccordement de l'élément déflecteur (26) à un étrier de sortie pivotant (20) et à une portion de toit fixe (28) du véhicule.

13. Procédé selon la revendication 12, **caractérisé en ce que** le surmoulage de bord (32) est formé dans une région d'afflux centrale (X) de l'élément déflecteur (26) en un composant en plastique dur et, dans les régions d'extrémité latérales (Y) de l'élément déflecteur (26), est formé d'un composant en plastique souple qui présente une plus grande flexibilité que le composant en plastique dur.

14. Procédé selon la revendication 12 ou 13, **caractérisé en ce que** lors du raccordement de l'élément déflecteur (26) à l'étrier de sortie (20) et à la portion de toit fixe (28), des portions d'extrémité de l'élément déflecteur disposées des deux côtés sont cintrées dans la direction d'un plan médian longitudinal vertical du déflecteur de vent.

15. Procédé selon l'une quelconque des revendications 12 à 14, **caractérisé en ce que** lors de l'injection de l'au moins un composant de matériau dans la cavité de moule, au moins une baguette de renfort (40A, 40B) est réalisée, laquelle part du surmoulage de bord (32) et vient en prise par le dessus avec l'élément déflecteur (26) ou le traverse dans des régions espacées du bord.
